(19) Europäisches Patentamt
European Patent Office
Office européen des brevets

(11) **EP 2 037 410 A1**

(12) **EUROPEAN PATENT APPLICATION**

(43) Date of publication:
**18.03.2009 Bulletin 2009/12**

(51) Int Cl.:
**G06T 7/20** (2006.01)

(21) Application number: **07301365.8**

(22) Date of filing: **14.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
 • **Badrinarayanan, Vijay**
 **92648 Boulogne Cedex (FR)**

 • **Le Clerc, François**
 **92648 Boulogne Cedex (FR)**
 • **Oisel, Lionel**
 **92648 Boulogne Cedex (FR)**
 • **Perez, Patrick**
 **92648 Boulogne Cedex (FR)**

(74) Representative: **Le Dantec, Claude**
 **46, Quai Alphonse Le Gallo**
 **92100 Boulogne-Billancourt (FR)**

(54) **Method for tracking an object in a sequence of images and device implementing said method**

(57) The invention relates to a method of image processing adapted for tracking an object in a sequence of images. The method is based on two tracking methods (10, 34) that run independently and possibly exchange information (36, 38) at the end depending of the success of failure of said tracking methods.

More precisely, according to the invention, the successful tracking method provides information in the form of a probability distribution of locations of the target object to the other tracking method.

FIG. 3

EP 2 037 410 A1

**Description**

1. Field of the invention

The invention belongs to object tracking domain. Specifically, the present invention relates to a method of image processing adapted for tracking any general moving object marked by a user in a sequence of images. The invention further relates to a device implementing the method.

2. Background of the invention

Numerous applications may make it necessary to segment and to track objects in a sequence of images in particular in the field of post-production, of video coding and of video indexing. The segmentation and the tracking of objects which may be of complex shape constitute two problems in image processing which are, currently, imperfectly solved. Specifically, the current solutions do not make it possible to attain by automated processings the degree of accuracy and of robustness required for post-production applications. Thus, the segmentation and tracking tools available in post-production platforms, in particular for applications dedicated to colour correction, are slow and irksome to use. Considerable involvement of a human operator is in fact necessary to obtain results of acceptable quality.

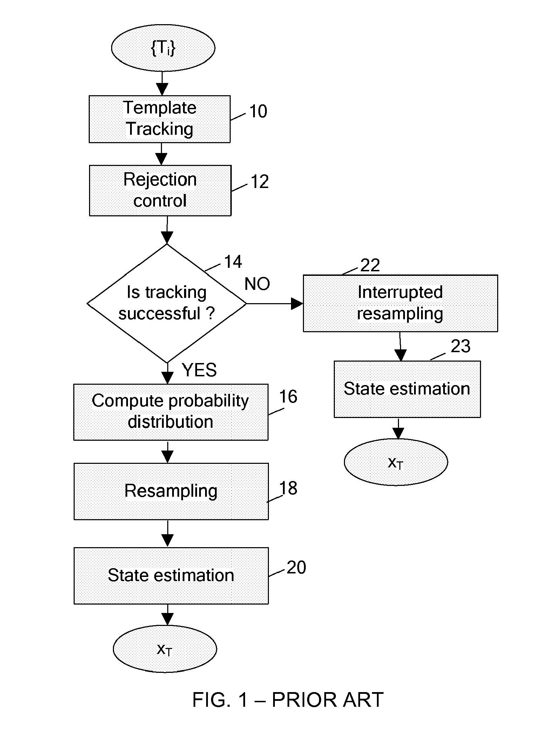

Deterministic tracking methods are known in the prior art. An example of such a method, named randomized template tracking method, is described with reference to figure 1. In the starting frame of the video sequence, a hand marked object or a detected object is identified. Then, in the same frame, a set of N template locations is drawn using, for example, a uniform number generation. A template of predefined maximum size is associated to each of these locations. The templates, denoted $\left\{T_i\right\}_{i=1}^{i=N}$, are possibly trimmed in order that each of them lies within the marked object boundary. The following steps are then applied sequentially in the same order on every frame following the starting frame unless a tracking failure is signal.

At step 10, each template $T_i$ is tracked in the current frame using for example a common normalized cross-correlation tracking method in a predefined search space. Such a method is further described in an article from J. P. Lewis entitled "Fast Template Matching" and published in Vision Interface in 1995 on p. 120-123. This method associates every template with a correlation surface. The grid location corresponding to the maximum of the correlation surface is the estimated new location of the template. Consequently a translation vector, denoted $V_i$, is derived for each template $T_i$ in the set.

At step 12, a subset of these templates is then possibly discarding in the current frame, i.e. outliers are removed from the set $\left\{T_i\right\}_{i=1}^{i=N}$. The step 12 is referred as rejection control step on figure 1. A robust clustering step is used to derive a first subset of set $\left\{V_i\right\}_{i=1}^{i=N}$. To this aim, each motion vector in the set $\left\{V_i\right\}_{i=1}^{i=N}$ is compared with the remaining vectors using an Euclidean distance measure. A corresponding bin-count $B_i$ is incremented for every vector that lies within a small predefined clustering radius r of this vector. All bin counts are set to 1 initially for all the templates. A subset $\{V_i\}_{i \in I}$, $|I| \leq N$ of the set $\left\{V_i\right\}_{i=1}^{i=N}$ is formed by selecting all the motion vectors with associated bin-count $B_i \geq N/2$. If N is odd the relationship is defined as $B_i \geq (N+1)/2$. A second subset is then derived. To this aim, the two-dimensional mean of the first subset $\{V_i\}_{i \in I}$ and the resulting covariance matrix denoted as $\{\mu, \Sigma\}$ are computed. For computation sake, the cross variances are assumed to be zero. A Gaussian distribution g(V) is defined in motion space with these parameters. A weight $w_i = g(V_i)$ is assigned to each motion vector in the set $\left\{V_i\right\}_{i=1}^{i=N}$. The set $\left\{T_i, w_i\right\}_{i=1}^{i=N}$ is then sorted in a descending order of weights. The weight of the element with index (N/2)-1, if N is even, or (N-1)/2, if N is odd is selected. This weight is denoted as C. Each template is then assigned a probability $p_i = \min\{1.0, w_i/C\}$. Templates are finally discarded based on a threshold on this probability, i.e. templates with an assigned probability lower than a predefined threshold are discarded. At the end of this step, only M templates are retained. This subset is denoted $\left\{T_i\right\}_{i=1}^{i=M}$, where $M \leq N$.

At step 14, it is checked if the tracking is successful or not. The tracking is considered successful if at least N/2 (i.e. M> N/2), if N is even, or (N+1)/2 (i.e. M> (N+1)/2), if N is odd, templates are retained, and is considered failing otherwise.

If the tracking is successful, the correlation surfaces of the retained templates are combined, at step 16, into a probability distribution p(x) from which new templates are resampled at step 18 to replenish the template set. With $\left\{T_i\right\}_{i=1}^{i=M}$, the target state $x_T$ is estimated at step 20 to be the mean of these template locations. The target state is the location of the target object on the image grid. The minimum bounding rectangle is also constructed, denoted $B_{min}$, around these templates, which acts as the spatial bound for the state distribution computed below. Given $x_T$, the set of correlation surfaces associated with $\left\{T_i\right\}_{i=1}^{i=M}$ is translated to this location, sum and normalized, all within $B_{min}$, to result in a probability distribution p(x). We consider p(x) as the distribution of target state $x_T$ generated by the randomized template tracking method. N-M template locations, denoted $y_k$, are sampled from p(x) as follows:

$$y_k \approx p(x), 1 \le k \le (N-M)$$

To each sampled location in the set $\{y_k\}$, Gaussian noise is added to increase sample diversity as shown below:

$$\hat{y}_k = y_k + \eta(0, \sigma^2)$$

Finally, to each sample location $\hat{y}_k$ an image patch is associated around it as described below. In absence of a natural scale estimation scheme here, we are forced to remain conservative in choosing the dimensions of the new template. The chosen template is trimmed to fit $\alpha B_{min}$, $\alpha \ge 1$. The value $\alpha=1$ is the most conservative estimate which we employ when tracking very small sized objects in aerial videos and the like. Here $\alpha$ must not be misconstrued to be a scale estimate of the tracked object.

If the tracking failed, all templates in the set $\{T_i\}_{i=1}^{i=N}$ are retained at step 22 and their positions are extrapolated by the last successfully registered object translation, meaning the translation of the target state at the step in the past when tracking was signaled as successful. A target state $x_T$ is however estimated, at step 23, mainly for display purpose. In this case the target state $x_T$ is estimated to be the mean of the template locations after extrapolation. The control is then passed to step 10 when the next frame arrives. Such a scheme is found to be useful in handling very short occlusions of a few frames.

Such a deterministic tracking method often failed when there is a changed in the appearance of the template either due to object rotation, strong illumination changes or occlusion. In these cases, the tracking is lost or even worse the tracking method tracks another object that the target object.

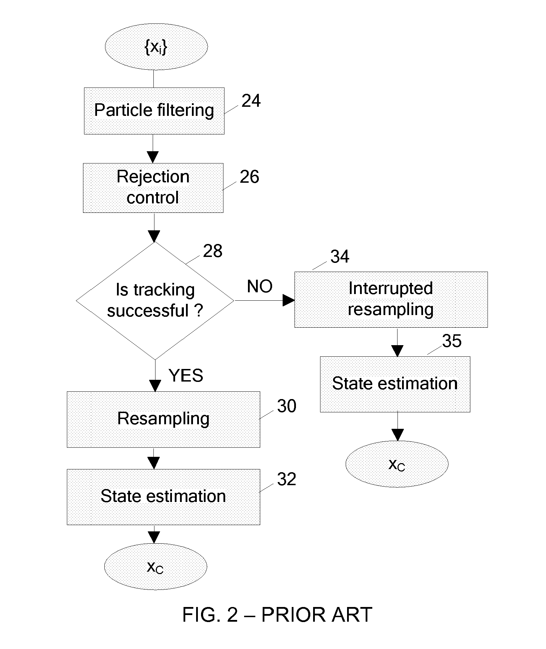

Probabilistic tracking methods are also known from the prior art. Some of them are based on particle filtering. An example of such a color model based particle filtering method is given in the document from P. Perez et al. entitled "Data fusion for visual tracking with particles" and published in Proc. IEEE, 92(3):495-513, 2004. Such a tracking method is further described in reference to figure 2.

At step 24, the particle positions denoted $\{x_i\}_{i=1}^{i=K}$ in the current frame are predicted from the positions estimated in the past frame using for example random walk approach. A weight denoted $\pi_i$ is also computed for each particle position by matching the local histogram around the particle to the constant color histogram model of the target object stored in a memory from the first frame. This weight is higher if the location match the color model. The weights $\{\pi_i\}$ sum to unity.

$\{\pi_i, x_i\}_{i=1}^{i=K}$ defines a probability distribution from which the target state $x_C$, i.e. the location of the target object on the image grid, is estimated (step 32). The step 24 known as filtering step is further described in the document from P. Perez et al.

At step 26, a rejection probability is computed. This rejection probality is further used at step 28 to make a binary decision for the color based tracking method. To this aim, the covariance matrix $C_\pi$ of the distribution $\{x_i, \pi_i\}_{i=1}^{i=K}$ and the covariance matrix $C_S$ of the distribution $\{x_i, \frac{1}{K}\}_{i=1}^{i=K}$ are computed. Then the determinants of these covariance matrices are computed. From the property of determinants we know that this scalar quantity measures the effective volume of the parallelopiped constructed by the row vectors of the matrix. This motivates the use of this quantity as a scalar confidence measure to determine if the tracking is successful or not. With the above notations, the rejection probability $p_r$ is defined as follows:

$$p_r = \min\left\{1.0, \frac{\det[C_\pi]}{\det[C_s]}\right\}$$

$p_r$ tends to 1 as the uncertainty in the distribution increases and tends towards 0 as the distribution becomes more peaked. It is interesting to note that it can be inconsistent to analyze the performance of the filter based solely on evolution of its covariance over time. This is because the spread (covariance) of the samples at each tracking step is not constant and even with resampling there is bound to be some fluctuations. Therefore, it is necessary to account for this variable spread via a factor like Cs.

At step 28, the tracking is considered successful if $p_r$ is less than an empirical threshold and is considered failing otherwise.

If the tracking is successful, the filtering distribution is resampled at step 30 as described in the document from Perez et al. and the target state $x_C$ is estimated at step 32 to be the mean of the distribution estimated at step 24.

If the tracking failed, the resampling of the filtering distribution is stopped at step 34. This causes the samples to be more and more spread at each tracking step. In the absence of clutter, the sample weights tend to be uniform which results in the probability $p_r$ tending to 1. But once a subset of the samples gains distinctly more weight (say in a relock scenario after a few frames of occlusion) a few frames later, the rejection probability $p_r$ tends towards 0 leading to a success signal. In this case; the target state $x_T$ is estimated, at step 35, to be the mean of the filtering distribution.

The particle filtering recommences at step 24 when the next frame arrives.

Such a probabilistic tracking method often fails due to the fact that multi-modal distributions cannot be approximated over a long period by a small finite number of particles and this slowly can cause tracking drift.

3. Summary of the invention

The object of the invention is to alleviate these disadvantages of the prior art.

More precisely, the aim of the invention is to improve the tracking of an object in a sequence of images especially in case of extreme illumination changes and in case of partial occlusion while keeping it simple.

The invention relates to a method of image processing adapted for tracking an object in a sequence of images comprising the following steps applied on each image of the sequence:

- determining the location of N templates in the current image on the basis of locations of the N templates in a preceding image, with N an integer, the step being called first tracking step;
- determining, according to a first predefined criteria, if the first tracking step is successful or is not successful; and
- determining a probability distribution, called first probability distribution, representing the probability distribution of the object location in the current image.

The method further comprises the following steps:

- determining the location of K particles in the current image on the basis of locations of the K particles in the preceding image, with K an integer, and assigning each particle a weight representing the level of match between an observation made for the particle in the current image and a predefined model, the K particles' locations and associated weights defining a second probability distribution, the step being called second tracking step;
- determining, according to a second predefined criteria, if the second tracking step is successful or is not successful;
- if the first tracking step is not successful and the second tracking step is successful :

  - determining the location of N new templates in the current image based on the second probability distribution;
  - replacing the N templates in the current image with the N new templates;

- determining the location of the object in the current image based on the second probability distribution; and
- if the first tracking step is successful and the second tracking is not successful:

  - determining the location of K new particles in the current image based on the first probability distribution;
  - replacing the K particles in the current image with the K new particles and assigning each particle a same predefined weight;
  - determining the location of the object in the current image based on the first probability distribution; and
- if both first and second tracking steps are successful or if both first and second tracking steps are not successful determining the location of the object in the current image on the basis of the first probability distribution or on the basis of the second probability distribution.

Advantageously, the predefined model is a color histogram of the object and the observation is a color histogram computed in a patch centered on the particle location and the predefined weight equals 1 divided by K.

According to an advantageous embodiment, the first tracking step comprises the following step:

- determining, for each template of the preceding image, an image area in the current image, called correlation surface, whose correlation with a previously defined correlation surface centered on the template is maximum; and
- determining the template positions in the current image as the centers of the correlation surfaces in the current image.

According to particularly advantageous embodiment, the method further comprises a step for assigning a priority level to the first tracking step and to the second tracking step, and:

- if the priority level of the first tracking step is higher than the priority level to the second tracking step, then:

  - if the first tracking step is not successful and the second tracking step is successful, switching the priority levels between the first tracking step and the second tracking step;
  - if the first tracking step is successful and the second tracking is not successful, leaving the priority levels unchanged;
  - if both first and second tracking steps are successful or if both first and second tracking steps are not successful determining the location of the object in the current image on the basis of the first probability distribution and leaving the priority levels unchanged; and

- if the priority level of the first tracking step is lower than the priority level to the second tracking step, then:

  - if the first tracking step is not successful and the second tracking step is successful, leaving the priority levels unchanged;
  - if the first tracking step is successful and the second tracking is not successful, switching the priority levels between the first tracking step and the second tracking step;
  - if both first and second tracking steps are successful or if both first and second tracking steps are not successful determining the location of the object in the current image on the basis of the second probability distribution.

4. Brief description of the drawings

Other features and advantages of the invention will appear with the following description of some of its embodiments, this description being made in connection with the drawings in which:

- Figure 1 depicts the flowchart of a randomized template tracking method of the prior art;
- Figure 2 depicts the flowchart of a color based tracking method of the prior art;
- Figure 3 depicts the flowchart of a tracking method according to a first embodiment the invention;
- Figure 4 depicts the flowchart of a tracking method according to a second embodiment the invention;
- Figure 5 depicts the flowchart of a tracking method according to a third embodiment the invention;

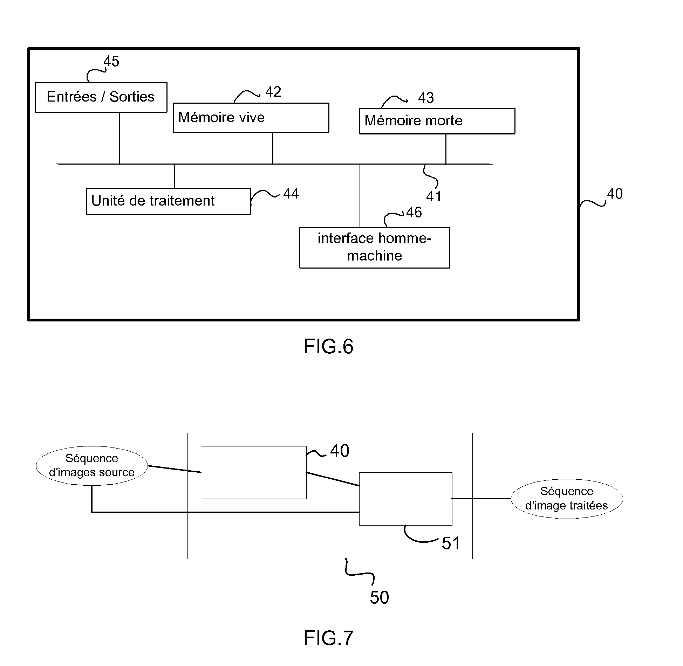

- Figure 6 depicts a tracking device according to the invention; and
- Figure 7 depicts a post-production device according to the invention.

5. Detailed description of preferred embodiments

The invention relates to a tracking method combining two known tracking methods. As an example, the two tracking methods described in the prior art section may be used. However, any other tracking method may be used provided that one of them relies on an adaptive set/catalogue model of the object and the other relies on a constant holistic model like a color histogram of the object. In the following, the two methods are referred as method T and method C, where T stands for template tracking and C for color based tracking. The method C may be replaced by any particle filtering based tracking method, i.e. not necessarily color based.

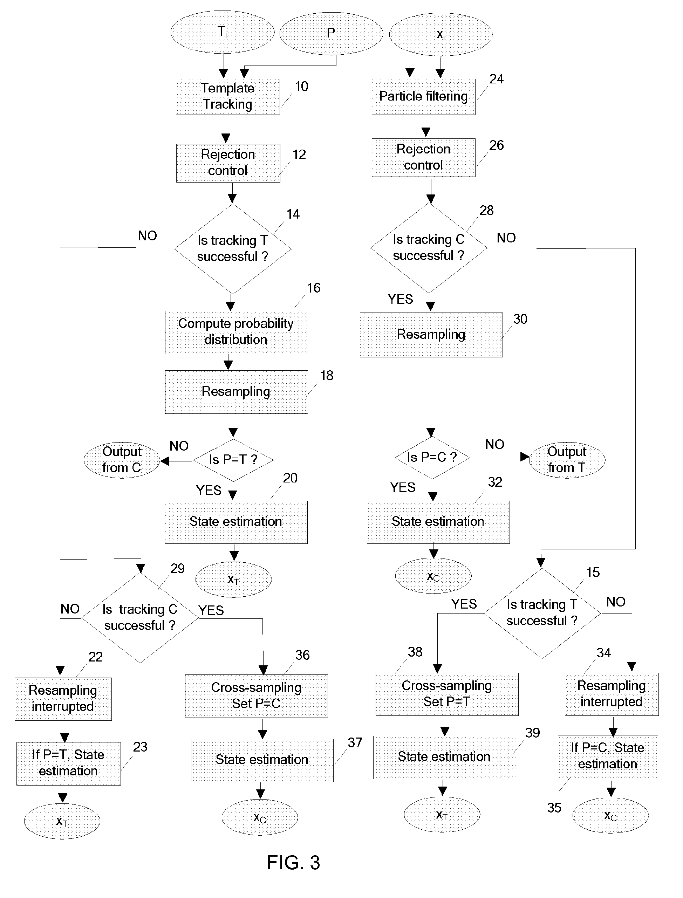

The tracking method according to the invention is described with reference to figures 3, 4 and 5. On this figures, the represented boxes are purely functional entities, which do not necessarily correspond to physical separated entities. Namely, they could be developed in the form of software, or be implemented in one or several integrated circuits. The steps of said method with the same reference number as those of steps of the methods of figures 1 and 2 are identical.

A first embodiment is described with reference to figure 3. At the initialization stage of tracking, not represented on figure 3, a priority denoted P is assigned to one of the two tracking methods. This priority P is then switched between the two methods depending on their current signs of success or failure of the methods at each tracking step. Furthermore, at each instant the method that has the priority makes an estimation of the target state denoted $\hat{X}$.

Both methods are run independently without any interaction or information exchange except possibly at the very end (steps 36 and 38). Therefore, both methods may run in parallel.

As a first example, it is assumed that at the initialization stage method T has been given the priority, i.e. P=T. Steps 10 to 14 apply:

  ○ if T is successful steps 16 to 18 apply and the target state $\hat{X}$ is made from T (step 20);
  ○ otherwise (i.e. if T failed) it is checked if C is successful (step 29):

    ■ if C is successful, the cross sampling step 36 described below applies, P is set to C and the target state $\hat{X}$ is made from C (step 37);
    ■ otherwise (i.e. if C failed), resampling is interrupted (step 22) and the target state is made from T (step 23);

It should be understood that even if P=T, steps 24 to 28 apply:

  ○ if C is successful step 30 apply and target state is estimated from the T side, either at step 20 (if T is also successful) or from the C side at step 37 (if T failed);
  ○ otherwise:

    ■ if T also failed, resampling is interrupted at step 34 but target state is made from T since P=T;
    ■ Otherwise, cross-sampling step 38 applies, and the target state is estimated from T (step 39 or equivalently step 20).

As a second example, it is assumed that at the initialization stage method C has been given the priority, i.e. P=C.
Steps 24 to 28 apply:

○ if C is successful, step 30 applies and the target state $\hat{X}$ is made from C (step 32);
○ otherwise (i.e. if C failed) it is checked if T is successful (step 15):

■ if T is successful, the cross sampling step 38 described below applies, P is set to T and the target state $\hat{X}$ is made from T (step 39);
■ otherwise (i.e. if T failed), resampling is interrupted (step 34) and the target state is made from C (step 35);

It should be understood that even if P=C, steps 10 to 14 apply:

○ if T is successful steps 16 and 18 apply and target state is estimated from the C side, either at step 32 (if C is also successful) or from the T side at step 39 (if C failed);
○ otherwise:

■ if C also failed, resampling is interrupted at step 22, but target state is made from C since P=C,
■ Otherwise, cross-sampling step 36 applies, and the target state is estimated from C (step 37 or equivalently step 32).

It should be understood that the steps 20 and 39 are identical and that steps 32 and 37 are identical.

The essential features of the invention are the cross-sampling steps 36 and 38 which are further described below. These steps are named on figure 3, cross-sampling steps. At these steps both tracking methods interact and exchange information in only one direction, i.e. the successful tracking method provides information in the form of a probability distribution of locations of the target object to the other tracking method. There are two types of cross sampling. Both steps are further detailed below.

If P=T and method T is successful, then the state estimate as stated earlier is made, at step 20, from method T. If at some later instant method T fails but method C is successful, possibly when there is partial occlusion and/or jerky out of the image plane rotation. The target state is now estimated from method C (step 37), the priority switched to method C and the following cross sampling step 36 applies. The entire template set

$\{T_i\}_{i=1}^{i=N}$ is discarded, i.e. are erased from memory, and a new set of N template locations are sampled from the color filtering distribution (i.e. $\{\pi_i, x_i\}_{i=1}^{i=K}$)) at the corresponding instant and each location assigned an image template, e.g. a rectangle of a predefined size. The templates are then trimmed, if necessary, to fit the bounds of the object as decided by method C. Therefore, the trimming step may change the size of each template. It is also to be noticed that the past object model composed by the templates is totally discarded and updated at the current instant from the color distribution. The step 36 gives the template tracking method on the whole a new set/catalogue model of the target object.

If P=C and method C is successful, then the state estimate as stated earlier is made, at step 32, from method C. Now say at some later instant method C fails but method T is successful, typically when there are extreme illumination changes and/or nearby clutter. The state estimate is now made from the method T (step 39), the priority switched to method T and the following cross sampling step 38 applies. The current samples

$\{\pi_i, x_i\}_{i=1}^{i=K}$ which compose the filtering distribution are discarded, i.e. erased from memory, and replaced by new samples drawn from the target state distribution p(x) defined by the combination of correlation surfaces output by method T at step 16. Each sample is weighted equally (i.e. the new weights are all set to 1/K to result in the distribution given as $\{1.0/K, x_i\}_{i=1}^{i=K}$).). The color model, i.e. color histogram, is however not updated. The constant color model of the target object derived from the first frame is stored in a memory and is never updated.

If both methods T and C failed at the same tracking stage (i.e. on the same image), then the resampling step in both tracking method are interrupted. In this case we resort to both interrupting resampling steps 22 and 34. This case may occur in a complete occlusion scenario where the occluding object shares no commonality with the target reference model.

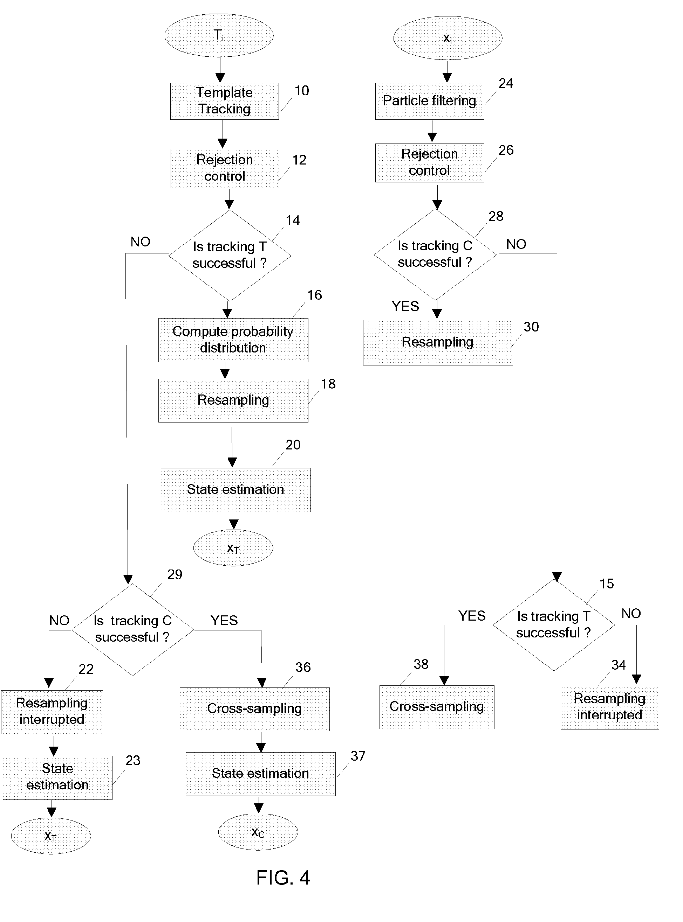

According to another embodiment described on figure 4, no priority is set, but T is the main tracking method and C is used to update its state distribution especially when T failed and C is successful. This solution is equivalent to set P=T and to never update P.

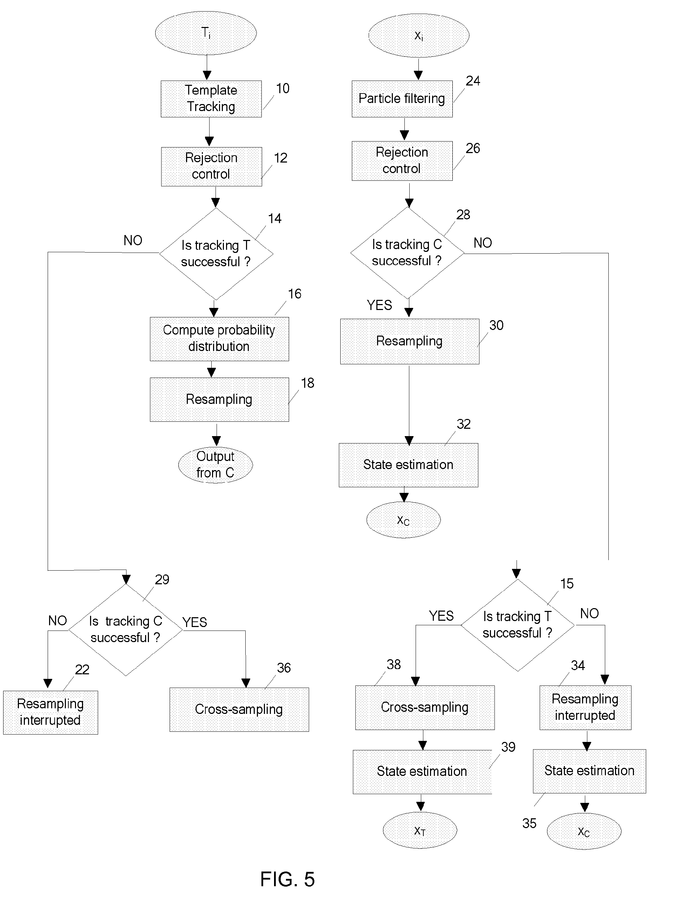

A third embodiment is depicted on figure 5. In this case no priority is set, but C is the main tracking method and T is used to update its state distribution especially when C failed and T is successful. This solution is equivalent to set P=C and to never update P.

The target model which is employed in the method according to the invention is a multi-part model. Advantageously, the method of the invention does not require a single fused target state distribution but uses instead two target state distributions: one coming from the template tracking method and the other one coming from the color based particle filtering method. The first part is composed of the gray level templates. Due to the sequential resampling procedure, at any tracking instant, the age of each element in the template set is possibly different from the rest. Therefore, this set consists of templates having lifespans of a few to several tens of frames and thus plays the role of the dynamically adapted part of the entire target model.

The second part of the model is the constant color histogram of the target object. This is the static part of the two part target appearance model and does not interact with the first part. The histogram is deliberately kept constant to avoid false adaptation due to illumination, orientation and size changes.

The present invention also relates to an image processing device referenced 40 in Figure 4 which implements the method described previously and which is therefore adapted for object tracking. Only the essential elements of the device are represented in Figure 4. The device 40 comprises in particular: a random access memory 42 (RAM or similar component), a read only memory 43 (hard disk or similar component), a processing unit 44 such as a microprocessor or a similar component, an input/output interface 45 and a man-machine interface 46. The device is for example a computer. These elements are linked together by an address and data bus 41. The read only memory 43 contains the algorithms implementing steps 10 and 38 of the method according to the invention. On power-up, the processing unit 44 loads and executes the instructions of these algorithms. The random access memory 42 in particular comprises the programmes for operating the processing unit 44 which are loaded on power-up of the appliance, as well as the images to be processed. The inputs/outputs interface 45 has the function of receiving the input signal (i.e. the sequence of source images) and outputs the result of the tracking of objects according to the steps 10 to 38 of the method of the invention. The man-machine interface 46 of the device allows the operator to interrupt the processing and to manually adjust the contour of an object at each step of the method, as soon as a loss of accuracy in the contour arises which is not compatible with the requirements thereof. The results of the tracking in each image are stored in random access memory then transferred to read only memory so as to be archived with a view to subsequent processings. The man-machine interface 46 in particular comprises a control panel and a display screen.

The device for segmenting and tracking objects can also be used in an image sequence post-production device referenced 50 in Figure 5. In this case, the information provided by the device 40 is used to process a video sequence - for example a film - in post-production with the aid of processing means 51. These means can make it possible to perform one of the following processings:

- secondary colour correction which consists in modifying the shot of an object in a scene (for example a face) ;
- video mixing (or "compositing") which consists in extracting a particular object from a scene so as to insert it into another scene;
- special effects (for example, removal of an foreground object and replacement by the background) ;

and/or

- restoration of movies, and more particularly removal of degraded zones in the image resulting from defects on the film.

The invention is not limited to post-production applications but can also be used for various other applications such as :

- Video coding : improvement of the compression rate by coding the object in a single frame then transmitting only its variations of shape and of position ;
- Indexation : extraction of semantically pertinent information on the content of the images ; and
- More generally, all the processes which require a processing adapted to each of the objects in the image.

**Claims**

1. Method of image processing adapted for tracking an object in a sequence of images comprising the following steps applied on each image of the sequence:

    - determining (10) the location of N templates in the current image on the basis of locations of said N templates in a preceding image, with N an integer, said step being called first tracking step;
    - determining (14), according to a first predefined criteria, if the first tracking step is successful or is not successful;
    - determining (16) a probability distribution, called first probability distribution, representing the probability distribution of the object location in the current image;
    the method being **characterized in that** it further comprises the following steps:
    - determining (24) the location of K particles in the current image on the basis of locations of said K particles in said preceding image, with K an integer, and assigning each particle a weight representing the level of match between an observation made for said particle in the current image and a predefined model, said K particles' locations and associated weights defining a second probability distribution, said step being called second tracking step;
    - determining (28), according to a second predefined criteria, if the second tracking step is successful or is not successful;
    - if the first tracking step is not successful and the second tracking step is successful :

        - determining (36) the location of N new templates in the current image based on the second probability distribution; and

- replacing (36) said N templates in the current image with said N new templates;
- determining (32, 37) the location of the object in the current image based on the second probability distribution;
- if the first tracking step is successful and the second tracking is not successful:
- determining (38) the location of K new particles in the current image based on the first probability distribution; and
- replacing (38) said K particles in the current image with said K new particles and assigning each particle a same predefined weight;
- determining (20, 39) the location of the object in the current image based on the first probability distribution;

- if both first and second tracking steps are successful (20, 32) or if both first and second tracking steps are not successful (23, 35) determining the location of the object in the current image on the basis of the first probability distribution or on the basis of the second probability distribution.

2. Method according to claim 1, wherein the predefined model is a color histogram of the object and the observation is a color histogram computed in a patch centered on the particle location.

3. Method according to claim 1, wherein the predefined weight equals 1 divided by K.

4. Method according to claim 1 to 3, wherein the first tracking step (10) comprises the following step:

- determining, for each template of the preceding image, an image area in the current image, called correlation surface, whose correlation with a previously defined correlation surface centered on said template is maximum; and
- determining the template positions in the current image as the centers of the correlation surfaces in the current image.

5. Method according to claim 1, wherein it further comprises a step for assigning a priority level to the first tracking step and to the second tracking step, and wherein:

- if the priority level of the first tracking step is higher than the priority level to the second tracking step, then:

- if the first tracking step is not successful and the second tracking step is successful, switching the priority levels between the first tracking step and the second tracking step;
- if the first tracking step is successful and the second tracking is not successful, leaving the priority levels unchanged;
- if both first and second tracking steps are successful (20) or if both first and second tracking steps are not successful (23) determining the location of the object in the current image on the basis of the first probability distribution and leaving the priority levels unchanged; and

- if the priority level of the first tracking step is lower than the priority level to the second tracking step, then:

- if the first tracking step is not successful and the second tracking step is successful, leaving the priority levels unchanged;
- if the first tracking step is successful and the second tracking is not successful, switching the priority levels between the first tracking step and the second tracking step;
- if both first and second tracking steps are successful (32) or if both first and second tracking steps are not successful (35) determining the location of the object in the current image on the basis of the second probability distribution.

$\{T_i\}$

Template
Tracking — 10

Rejection
control — 12

14

Is tracking
successful ?

NO → Interrupted
resampling — 22

State estimation — 23

$x_T$

YES

Compute probability
distribution — 16

Resampling — 18

State estimation — 20

$x_T$

FIG. 1 – PRIOR ART

FIG. 2 – PRIOR ART

FIG. 3

EP 2 037 410 A1

FIG. 4

$T_i$

Template Tracking — 10

Rejection control — 12

Is tracking T successful ? — 14

NO

Compute probability distribution — 16

Resampling — 18

Output from C

$x_i$

Particle filtering — 24

Rejection control — 26

Is tracking C successful ? — 28

NO

YES

Resampling — 30

State estimation — 32

$x_C$

Is tracking C successful ? — 29

NO

YES

Resampling interrupted — 22

Cross-sampling — 36

Is tracking T successful ? — 15

YES

NO

Cross-sampling — 38

Resampling interrupted — 34

State estimation — 39

State estimation

$x_T$

35

$x_C$

FIG. 5

FIG.6

FIG.7

**European Patent Office**

**EUROPEAN SEARCH REPORT**

Application Number

EP 07 30 1365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KIM SHEARER ET AL: "Combining multiple tracking algorithms for improved general performance" PATTERN RECOGNITION, ELSEVIER, GB, vol. 34, no. 6, June 2001 (2001-06), pages 1257-1269, XP009095281 ISSN: 0031-3203 * the whole document * ----- | 1-4 | INV. G06T7/20 |
| Y | YOAV ROSENBERG AND MICHAEL WERMAN: "Representing local motion as a probability distribution matrix and object tracking" DARPA IMAGE UNDERSTANDING WORKSHOP, 1997, pages 153-158, XP009095657 * the whole document * ----- | 1-4 | |
| Y,D | BLAKE A ET AL: "Data Fusion for Visual Tracking With Particles" PROCEEDINGS OF THE IEEE, IEEE. NEW YORK, US, vol. 92, no. 3, March 2004 (2004-03), pages 495-513, XP011108678 ISSN: 0018-9219 * page 1 - page 4 * ----- | 1-4 | |
| A,D | LEWIS J P: "Fast normalized template matching" PROCEEDINGS VISION INTERFACE '95, 16 May 1995 (1995-05-16), pages 120-123, XP009095154 * the whole document * ----- -/-- | 1-5 | |

TECHNICAL FIELDS SEARCHED (IPC)

G06T
G06K

The present search report has been drawn up for all claims

| Place of search | Date of completion of the search | Examiner |
|---|---|---|
| Munich | 8 February 2008 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 037 410 A1

**European Patent Office**

## EUROPEAN SEARCH REPORT

Application Number

EP 07 30 1365

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | BADRINARAYANAN VIJAY ET AL: "Probabilistic Color and Adaptive Multi-Feature Tracking with Dynamically Switched Priority Between Cues" PROCEEDINGS ON THE INTERNATIONAL CONFERENCE ON COMPUTER VISION, XX, XX, no. 11th conf, 14 October 2007 (2007-10-14), page 8pp, XP009095178 * the whole document * ----- | 1-5 | |
| | | | **TECHNICAL FIELDS SEARCHED (IPC)** |

The present search report has been drawn up for all claims

| Place of search | Date of completion of the search | Examiner |
|---|---|---|
| Munich | 8 February 2008 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

# EP 2 037 410 A1

## REFERENCES CITED IN THE DESCRIPTION

### Non-patent literature cited in the description

- **J. P. LEWIS.** Fast Template Matching. *Vision Interface,* 1995, 120-123

- **P. PEREZ et al.** Data fusion for visual tracking with particles. *Proc. IEEE,* 2004, vol. 92 (3), 495-513